# EUROPEAN PATENT SPECIFICATION

(11) **EP 3 204 649 B1**
(45) Date of publication and mention of the grant of the patent: **19.08.2020**
(21) Application number: 15800956.3
(22) Date of filing: 07.10.2015
(51) Int. Cl.: F04D 1/06, F04D 29/047, F16C 33/22

(54) **HYDRODYNAMIC SUPPORT DEVICE**
HYDRODYNAMISCHE UNTERSTÜTZUNGSVORRICHTUNG
DISPOSITIF DE SUPPORT HYDRODYNAMIQUE

(30) Priority: 07.10.2014 IT BO20140548
(43) Date of publication of application: 16.08.2017
(73) Proprietor: Caprari S.p.A., 41123 Modena (IT)
(72) Inventor: FERRI, Marco, I-41123 Modena (IT)
(74) Representative: Manzella & Associati
(86) International application number: PCT/IB2015/057663
(87) International publication number: WO 2016/055949

(56) References cited:
- US-A- 2 702 730
- US-A- 3 167 366
- US-A- 4 585 359
- US-A- 5 373 637

## Description

### Technical field

The present invention regards a hydrodynamic support device, in particular predisposed for use in a centrifugal pump.

### Prior art

Hydrodynamic support devices, suitable to be used between components operable according to a relative rotary motion are known.

Such devices may for example be used in apparatus such as centrifugal pumps, in which the aforementioned relative rotary motion serves to transfer fluids from a first height to a second greater height with respect to the first.

Centrifugal pumps normally comprise one or more pump stages predisposed to be traversed by the fluid to be transferred, each comprising a rotary member and a diffuser member suitably mounted on a shaft, so-called "pump shaft", and inserted in a containment jacket.

The rotary member of each stage usually provides for a fluid inlet section at an area in proximity of the shaft pump axis and a fluid outlet section at a peripheral area in proximity of the jacket. More precisely, the rotary member comprises a plurality of generally curved blades suitable to define respective outflow channels for transferring the liquid from the inlet section to the outlet section.

In order to generate the transfer of the liquid, the rotary member is suitable to be driven in rotation by the pump shaft on which it is suitably splined. Following the rotary motion of the rotary member and due to the conformation of the blades, the traversing fluid is thus subjected to a substantially centrifugal motion which increases the fluid dynamic energy thereof, so as to allow the passage from one stage to the subsequent one up to an outlet end or delivery section of the pump member.

From one pump stage to the subsequent one, according to the advancement direction, the liquid is adapted to be suitably conveyed through the diffuser member fixedly associated with the body of the pump member. The diffuser member generally comprises a plurality of sectors predisposed to transfer the return of the fluid from the peripheral area in proximity of the jacket to the central area in proximity of the inlet section of the rotary member of the subsequent pump stage.

The coupling devices usually used in the specific field comprise kinetic coupling means in particular for the radial support.

For example, patent application US 2013/0259706 discloses a radial support unit for a centrifugal pump, comprising a first component and a second component having longitudinal axis. The first component comprises discrete radial surfaces, separated by incisions, arranged at a radial distance from the longitudinal axis. The second component instead comprises a radial surface arranged at a further radial distance from the longitudinal axis. In addition, a clearance, established by the radial difference between the radial surfaces of the first component and the radial surface of the second component, is defined. In addition, passages for a flow of particles between surface incisions of the first component and the radial surface of the second component, are provided.

Patent US 8,794,840 discloses a support device comprising an inner member made of rigid material, an outer member made of rigid material and an intermediate annular member interposed between the inner member and the outer member, conforming contact surfaces facing the first and the second member respectively, comprising irregular-shaped support elements.

However, the prior art solutions do not fully meet the needs of the specific fields in which they can be used, in that they are complex to manufacture and thus also expensive.

For example, such solutions require precision machining on material per se usually expensive, especially if intended to be used in particularly aggressive environments.

Patent US 5,373,637 discloses a support device comprising a tubular layer made of self-lubricating and covering material obtained from filament material wound on the tubular layer. The aforementioned layer and the relative covering are joined by a thermosetting resin.

Patent US 2,702,730 discloses a support device comprising a sleeve made of synthetic resin material and a metal spiral embedded in a thickness of the plastic sleeve, the sleeve being mounted integrally joined with a rotary shaft. The device also comprises a part provided with slides intended to be mounted integrally joined to a fixed member coupled to the rotary member.

However, the prior art solutions are conceptually different and do not meet the versatility needed by the various application fields.

In particular, in the specific centrifugal pumps field, there particularly arises the need of uniforming the raw materials. On the contrary, the prior art solutions for hydrodynamic support require providing dedicated components, that are difficult to find, for all sizes of the centrifugal pumps.

### Presentation of the invention

The task of the present invention is to overcome the aforementioned problems, by providing a hydrodynamic support device, in particular for a centrifugal pump, that is reliable in operation and easy to manufacture.

With the aim of meeting this task, a further object of the present invention is to provide a hydrodynamic support device predisposed to be used in a centrifugal pump, guaranteeing an optimal operation in any field of application.

Another object of the invention is to provide a centrifugal pump that can be used with optimal hydraulic and mechanical performance, in an automatic and versatile manner.

Another object of the present invention is to provide a hydrodynamic support device, as well as a centrifugal pump, that has a simple construction and functional design, operating in a definitely reliable manner as well as at relatively economic cost.

The aforementioned objects are attained, according to the present invention, by the hydrodynamic support device according to claim 1, as well as the centrifugal pump according to claim 9.

The hydrodynamic support device according to the invention comprises a tubular core, having a longitudinal axis, an inner tubular surface and an outer tubular surface.

The device comprises at least one covering layer, preferably made of elastomeric material, said at least one covering layer being cylindrical-shaped and covering said inner tubular surface of said core, being intended to be faced on a rotary member.

The device according to the invention also provides for that the tubular core be obtained by winding a wire material around the aforementioned longitudinal axis in a helical fashion. In addition, the core comprises a plurality of turns arranged on each other in a compact configuration, also called "package ".

In practice, the aforementioned core is obtained forming a spiral-like element, in particular a helical spring.

In practice, the aforementioned compact package-like configuration corresponds to a winding of the turns at a pitch substantially equivalent to the transversal dimension of the aforementioned wire material that obtains the helical core.

Such compact configuration is stable due to the effect caused by the covering layer that serves to block the turns of the core.

Basically, the particular association between the helical core and the covering layer confers rigidity to the hydrodynamic support device, particularly in the axial direction.

More precisely, due to the firmly blocked compact configuration of the helical core, the hydrodynamic support device is substantially rigid, thus not substantially deformable, if subjected to axial compression actions or peak loads. Such actions may be performed, for example, for efficiently inserting the device on a respective fixed member or hub with interference, thus with force coupling.

Thus, the compact helical conformation, constrained by the presence of the aforementioned covering layer, is efficiently resistant to the axial compression.

According to a characteristic of the invention, the core is obtained by winding the aforementioned helical spring-shaped wire material, with the turns having a pitch substantially equivalent to the size along the aforementioned longitudinal axis of the wire material.

Thus, the turns of the helical spring intended to serve as a core are arranged on each other in absence of external actions.

In other words, the so-called free length of the aforementioned helical spring serving as a core of the support device, i.e. the length of the spring in absence of external actions, substantially coincides with the so-called package length of the spring, i.e. the length of the spring in the condition of the turns totally at contact against each other.

Basically, the helical spring core of the device according to the invention does not exert any elastic force if compression stressed in the direction of the longitudinal axis thereof.

The helical spring shape of the aforementioned core instead serves as a "framework" of the aforementioned support device, thus as a structural core, capable of rigidly resisting against the compression actions involved in the mounting step for axial insertion on the fixed member.

More precisely, the helical spring core obtained in the compact conformation, thus with the turns at mutual contact, has an inner tubular surface and an outer tubular surface, both shaping continuous tubular walls.

The particular helical spring core acts like a piece of a single tubular body, but - contrary to the latter - it is much more versatile in production, requiring the storage of the same wire material, preferably metal, for example usual steel spring or stainless steel, sufficient to obtain support devices of any transversal and longitudinal dimension.

A characteristic of the invention consists in the fact that it allows obtaining cores of any transversal and longitudinal size, thus suitable to support various diameter sizes or transversal sizes of rotary shafts, starting from the same wire material. This occurs due to the fact that it is sufficient to change the winding construction parameters, to adapt the core of the device according to the invention to the specific use requirements.

The construction of the device according to the invention is particularly economic, due to the high flexibility of use as well as the low number of required mechanical machining operations.

The hydrodynamic support device preferably comprises a further layer of covering material, so that both the aforementioned inner surface and the aforementioned outer surface of the helical core are covered. The covering layer is preferably elastomeric, for example made of rubber, thus with elastic properties that facilitate both the forced application thereof and the low friction sliding against a respective rotary surface coupled thereto.

The provision of the aforementioned covering layers and the wire spring structure facilitates the operation of slipping off the device, in case of replacement. As a matter of fact, the manual gripper-like tools are sufficient to guarantee a quick removal of the device from the member on which it was mounted with interference. Basically, it is sufficient to pull an end of the wire material wound like a helical spring to easily and safely remove the entire support device from the mounting seat.

According to a particular aspect of the invention, the layer of covering material is vulcanised on the surface of the tubular core. Application by vulcanisation guarantees an optimal and stable adhesion on the surface of the helical spring, thus the stability and resistance against the dynamic forces due to mounting and use.

In addition, the covering layer, preferably applied on the inner surface of the tubular core, may comprise a plurality of grooves to facilitate the liquid inflow between the fixed and rotary surfaces faced so as to obtain the hydrodynamic support, in case of use of the device in a centrifugal pump.

The aforementioned grooves are preferably obtained with substantially axial extension.

In addition, according to a further particular aspect of the invention, the further covering layer comprises a plurality of axial incisions, preferably distributed regularly around the longitudinal axis, for the positioning blades during the step of vulcanising the elastomeric covering layer.

Though the core is tubular-shaped, preferably cylindrical-shaped, it may have other shape provided it is tubular.

The covering layers are preferably cylindrical-shaped, at least at the surface for rotatable coupling with a rotary member.

The covering layers may be variously shaped, at the housing surfaces in respective seats of the coupled members.

Lastly, the device according to the invention may be advantageously used for supporting the rotary member of various apparatus, not only centrifugal pumps, but also for example motor members for driving submerged centrifugal pumps.

### Description of the drawings

The details of the invention shall be more apparent from the detailed description of a preferred embodiment of the centrifugal pump hydrodynamic support device according to the invention, illustrated by way of example in the attached drawings, wherein:
figure 1 shows an axial cross-section view of a portion of a centrifugal pump in which the hydrodynamic support device according to the invention is used;
figure 2 shows a perspective view of the same hydrodynamic support device ;
figures 3, 4 and 5 respectively show a front, plan and axial cross-section view, according to the axial plane of line V-V indicated in figure 3, of the hydrodynamic support device according to the invention;
figures 6 and 7 show a front and plan view of a component of the hydrodynamic support device shown in the previous figures.

### Embodiments of the invention

With particular reference to such figures, a centrifugal pump suitable to pump a liquid, for example water, from an inlet or intake section to an outlet or delivery section through one or more pump stages is indicated in its entirety with 1.

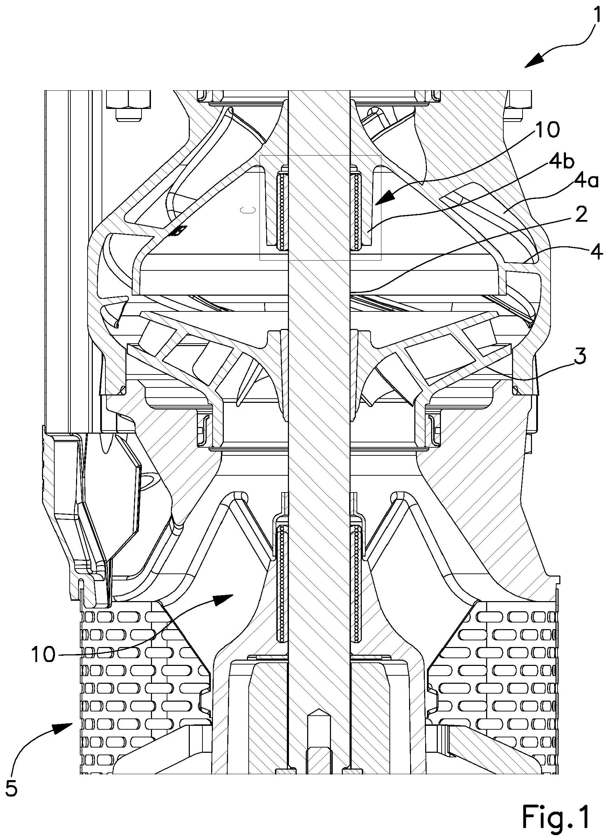

Thus, the pump 1 comprises a driving shaft or pump shaft 2 on which at least one rotary member 3 and a diffuser member 4 are mounted, the association of the rotary member 3 with the respective diffuser member 4 forming a pump stage (see figure 1).

A plurality of pump stages may be assembled in succession on the pump shaft 2. The latter is adapted to drive the corresponding rotary members 3 in rotation around the axis of the pump 1, thus transferring the fluid to be pumped from a respective supply portion 5 to an outflow portion (not represented in figure 1).

More precisely, each rotary member 3 is suitable to be splined integrally joined to the pump shaft 2 through a respective coupling portion in a known manner.

The diffuser member 4 is instead mounted fixed with respect to the pump shaft 2, being adapted to transfer the fluid flowing out from a peripheral outflow portion to a portion in proximity of the axis of the pump 1, for example for supplying a subsequent pump stage.

Generally, the diffuser member 4 in turn conforms a plurality of sectors 4a adapted to transfer the fluid coming from the peripheral area of the pump according to a centripetal path, for example from the outlet portion of rotary member 3 arranged upstream, towards an area in proximity of the axis.

Thus, the hydrodynamic support device 10 according to the invention is interposed between components in relative rotary motion, for example the pump shaft 2 and the diffuser member 4.

More precisely, the device 10 is preferably inserted in a special seat obtained at a coupling portion 4b of the diffuser member 4, preferably sleeve-shaped (see figure 1).

The rotatable coupling device 10 comprises a tubular element 11 suitable to serve as a core for the device 10.

The illustrated core 11 is substantially cylindrical-shaped. The core 11 is stably inserted, preferably through forced coupling, in the aforementioned seat obtained in the sleeve 4b of the diffuser member 4, of corresponding shape.

The core 11 has an inner tubular surface 12 facing towards its longitudinal axis A and an outer tubular surface 13, opposite the aforementioned inner tubular surface 12.

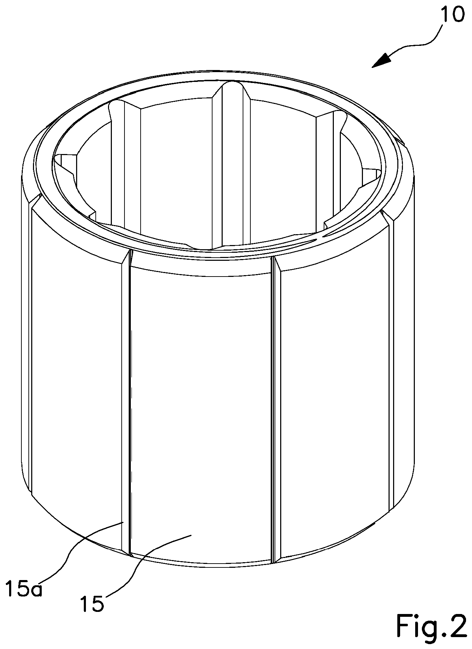

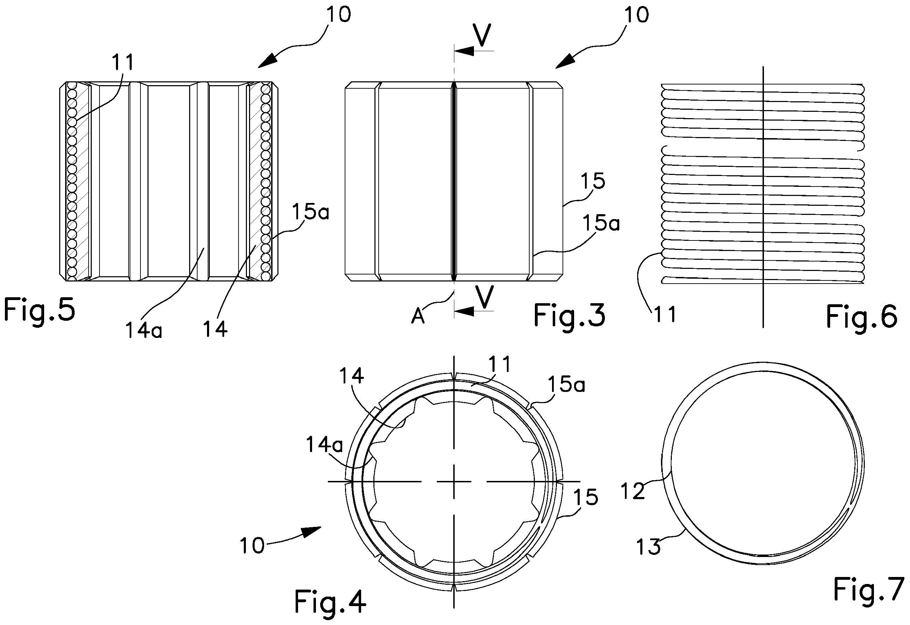

The core 11 advantageously conforms a propeller made of wire material. More precisely, the core 11 is obtained by winding a wire material around the longitudinal axis A, so as to form a plurality of turns, arranged on each other in a compact or package configuration (see figures 2 to 7).

In other words, the core 11 is shaped to form a helical spring, having a pitch substantially equivalent to the transversal dimension or diameter of the winding wire.

In the embodiment illustrated in figures 2 to 7, the wire material used for obtaining the core 11 has a circular section.

The core 11 obtained in the aforementioned compact configuration optimally resists to peak loads that may be exerted, for example, to insert the device 10 with force coupling in the respective seat of the diffuser 4 or any other member.

The core 11 is preferably made of wire metal material, for example stainless steel, so as to be suitable for use in particularly aggressive environments.

The hydrodynamic support device 10 further comprises at least one covering layer 14, for example on the inner tubular surface 12 of the core 11 arranged in the compact configuration.

Basically, the aforementioned covering layer 14 covers a respective side of the core 11, efficiently blocking it in the compact configuration, optimal for resistance against peak loads. Basically, the core 11 blocked by the covering layer 14 has an optimal rigid behaviour with respect to axial compression loads.

The covering layer 14 is preferably made of elastomeric material, for example rubber, so as to be radially elastic and allow an efficient hydrodynamic support, preferably with a given clearance, on the pump shaft 2. Such characteristic for example allows the optimal use of the device 10 even in aggressive environments or in presence of particles of considerable grain size that be interposed in the coupling meatus or where operations occur with high generation of heat.

The covering layer 14 preferably comprises a plurality of grooves 14a preferably axial, to facilitate the inflow of liquid between the fixed and rotary surface so as to obtain the hydrodynamic support.

Such grooves 14a may for example be V-shaped, preferably connected to the vertex, for facilitating the passage of the aforementioned flow of particles. In addition, the grooves 14a are preferably distributed regularly around the longitudinal axis A of the device 10, to facilitate an even passage.

The device 10 preferably comprises a further covering layer 15 applied on the outer surface 13 of the core 11. Just like in the case of the covering layer 14, even the further layer 15 is preferably elastomeric, for example made of rubber, to allow a stable housing in the respective seat, with preferably forced coupling.

Even the further layer 15 is additionally provided on the outer surface 132 through a vulcanisation process.

In order to guarantee an optimal covering, the covering layer 15 has a plurality of axial grooves 15a, defined by the gripping of the respective positioning blades, adapted to intervene on the outer surface 13 during the vulcanisation of the layers 14, 15 on the respective inner 12 and outer 13 surface of the core 11.

Alternatively, the positioning incisions may be present at the inner surface instead of the outer surface.

The operation of the hydrodynamic support device according to the invention is clear from the description above.

In an initial mounting, the rotary coupling device 10 is provided for assembly in the seat provided on the coupling portion of the diffuser member 4.

Basically, the rotary coupling device 10 is inserted in the aforementioned seat, exerting a peak load on the core 11, thus obtaining a force, hence stable, coupling.

It should be observed that the propeller 11 firmly blocked preferably by the presence of a pair of inner and outer covering layers 14, 15, optimally resists against the peak load exerted during assembly.

Subsequently, the pump shaft 2 may be inserted into the coupling device, thus providing clearance established between the covering layer 14 of the inner surface 12 of the core and the cylindrical surface of the shaft. Thus, the pump stages are associated alternating the rotary member 3 and the diffuser member 4 of each stage.

The hydrodynamic support device 10 is stably inserted on the respective fixed seat during the operation of the pumping member 1.

The hydrodynamic support device 10 is also rotatably coupled to the pump shaft 2, without seizing risks due to the presence of a layer of elastomeric covering material and, besides this, grooves 14a which let the particles possibly transferred by the pumping fluid to flow.

Thus, the hydrodynamic support device 10 according to the invention attains the object of allowing an efficient rotary coupling between components in a relative rotary motion.

The hydrodynamic support device 10 is also inexpensive and easy to manufacture, in that it can be made of any size depending on the production needs, by simply correspondingly setting the geometric parameters of the core 11 to be obtained.

More precisely, any transversal and longitudinal dimension of the helical core 11 of the device according to the invention may be easily obtained during production by varying the number of turns and the winding diameter, starting from the same wire material or any variety of the wire materials.

Thus, the raw materials, in particular the wire material for obtaining the helical core, for obtaining the device according to the invention, are easily available.

In addition, the same type of wire material may be easily used to meet the production needs for different couplings, in particular for the various sizes of the pumping members.

In practice, the used materials as well as the sizes may vary according to the needs.

Should the technical characteristics mentioned in the claims be followed by reference signs, such reference signs were included for the sole purpose of increasing the understanding of the claims and thus they shall not be deemed limiting the scope of the element identified by such reference signs by way of example.

## Claims

1. Hydrodynamic support device predisposed to be used in particular in a centrifugal pump (1) between a fixed member (4) and a rotary member (2) of the same pump, comprising a tubular core (11) having a longitudinal axis (A) and having an inner tubular surface (12) and an outer tubular surface (13), said core (11) being obtained in the shape of a helical spring, by winding a wire material around said longitudinal axis (A), whereby said helical spring tubular core (11) has a plurality of turns arranged on each other in a package-like fashion in a compact configuration, said helical spring tubular core (11) being obtained with a pitch substantially equal to the transversal dimension, along said longitudinal axis, of said wound wire material, and it comprises at least one covering layer (14, 15) applied on at least one of said tubular surfaces (12, 13) of said helical spring tubular core (11), so as to lock said helical spring winding in said compact configuration, said at least one covering layer (14) being cylindrical-shaped and covering said inner tubular surface (12) of said core (11), being intended to be faced on said rotary member (12).

2. Device according to claim 1, whereby said core (11) is obtained starting from metal wire material wound around said longitudinal axis (A).

3. Device according to claim 1 or 2, whereby said at least one covering layer (14, 15) is made of elastomeric material.

4. Device according to claim 3, whereby said at least one covering layer (14, 15) is applied on the respective said tubular surface (12, 13) by vulcanisation.

5. Device according to claim 1, whereby said covering layer (14) comprises a plurality of grooves (14a), for facilitating the inflow of liquid between said covering layer (14) and said faced rotary member (2), so as to obtain the hydrodynamic support of the rotary member (2).

6. Device according to claim 5, whereby said grooves (14a) have an axial extension and are regularly distributed about said longitudinal axis (A).

7. Device according to claim 1, whereby it comprises a further covering layer (15) applied on the surface to said at least one tubular surface (12, 13) on the opposite surface.

8. Device according to claim 7, whereby said further covering layer (15) is cylindrical-shaped and comprises a plurality of axial incisions (15a) obtained by positioning means during the vulcanisation of said elastomeric material.

9. Centrifugal pump comprising the hydrodynamic support device (10) according to one or more of the preceding claims, said hydrodynamic support device (10) being positioned integrally joined to a fixed member (4) of said pump (1) in a respective housing seat shaped by said fixed member (4) and interposed between said fixed member (4) and a rotary member (2) of said pump (1).

10. Method for obtaining a hydrodynamic support device according to one of claims 1 to 8, whereby the method provides for the steps of:
a. providing a wire material;
b. winding in the shape of a helical spring said wire material about a longitudinal axis (A), providing a plurality of turns arranged on each other in a package-like fashion in a compact configuration, a helical spring tubular core (11) being obtained with a pitch substantially equal to the transversal dimension, along said longitudinal axis, of said wound wire material wherein said helical spring tubular core (11) has an inner tubular surface (12) and an outer tubular surface (13);
c. applying a covering layer (14, 15) on at least said inner tubular surface (12) of said helical spring tubular core (11), so as to lock said helical spring winding in said compact configuration.

11. Method according to claim 10, whereby said step c. of applying said covering layer (14,15) occurs by vulcanising an elastomeric material.

## Patentansprüche

1. Hydrodynamische Stützvorrichtung, die dazu ausgelegt ist, insbesondere in einer Kreiselpumpe (1) zwischen einem festen Element (4) und einem Drehelement (2) derselben Pumpe verwendet zu werden, die einen rohrförmigen Kern (11), der eine Längsachse (A) sowie eine innere rohrförmige Fläche (12) und eine äußere rohrförmige Fläche (13) aufweist, umfasst, wodurch der Kern (11) durch Wickeln eines Drahtmaterials um die Längsachse (A) in Form einer Schraubenfeder erhalten wird, wodurch der rohrförmige Schraubenfederkern (11) eine Vielzahl von Windungen aufweist, die in einer paketartigen Weise in einer kompakten Auslegung aufeinander angeordnet sind, wobei der rohrförmige Schraubenfederkern (11) mit einer Steigung erhalten wird, die im Wesentlichen der Querabmessung des gewickelten Drahtmaterials entlang der Längsachse gleich ist, und wodurch sie mindestens eine Abdeckschicht (14, 15) umfasst, die auf mindestens eine der rohrförmigen Flächen (12, 13) des rohrförmigen Schraubenfederkerns (11) aufgebracht ist, um die Schraubenfederwicklung in der kompakten Auslegung zu verriegeln, wobei die mindestens eine Abdeckschicht (14) zylinderförmig ist und die innere rohrförmige Fläche (12) des Kerns (11) abdeckt und dem Drehelement (12) zugewandt sein soll.

2. Vorrichtung nach Anspruch 1, wodurch der Kern (11) ab dem Metalldrahtmaterial, das um die Längsachse (A) gewickelt ist, erhalten wird.

3. Vorrichtung nach Anspruch 1 oder 2, wodurch die mindestens eine Abdeckschicht (14, 15) aus einem Elastomermaterial besteht.

4. Vorrichtung nach Anspruch 3, wodurch die mindestens eine Abdeckschicht (14, 15) mittels Vulkanisierung auf die jeweilige rohrförmige Fläche (12, 13) aufgebracht ist.

5. Vorrichtung nach Anspruch 1, wodurch die Abdeckschicht (14) eine Vielzahl von Rillen (14a) zum Ermöglichen des Einlaufs von Flüssigkeit zwischen der Abdeckschicht (14) und dem zugewandten Drehelement (2), um die hydrodynamische Stütze des Drehelements (2) zu erhalten, umfasst.

6. Vorrichtung nach Anspruch 5, wodurch die Rillen (14a) eine axiale Erstreckung aufweisen und regelmäßig um die Längsachse (A) verteilt sind.

7. Vorrichtung nach Anspruch 1, wodurch sie eine weitere Abdeckschicht (15) umfasst, die auf die Fläche auf die mindestens eine rohrförmige Fläche (12, 13) auf der gegenüberliegenden Fläche aufgebracht ist.

8. Vorrichtung nach Anspruch 7, wodurch die weitere Abdeckschicht (15) zylinderförmig ist und eine Vielzahl von axialen Einschnitten (15a) umfasst, die durch Positionierungsmittel während der Vulkanisierung des Elastomermaterials erhalten werden.

9. Kreiselpumpe, die die hydrodynamische Stützvorrichtung (10) nach einem der vorhergehenden Ansprüche umfasst, wobei die hydrodynamische Stützvorrichtung (10) in einem jeweiligen Gehäusesitz, der durch das feste Element (4) geformt ist und zwischen das feste Element (4) und das Drehelement (2) der Pumpe (1) eingefügt ist, integral mit einem festen Element (4) der Pumpe (1) verbunden positioniert ist.

10. Verfahren zum Erhalten einer hydrodynamischen Stützvorrichtung nach einem der Ansprüche 1 bis 8, wodurch das Verfahren die folgenden Schritte vorsieht:
a. Bereitstellen eines Drahtmaterials;
b. Wickeln des Drahtmaterials um eine Längsachse (A) in Form einer Schraubenfeder, die eine Vielzahl von Windungen aufweist, die in einer paketartigen Weise in einer kompakten Auslegung aufeinander angeordnet sind, wobei ein rohrförmiger Schraubenfederkern (11) mit einer Steigung erhalten wird, die im Wesentlichen der Querabmessung des gewickelten Drahtmaterials entlang der Längsachse gleich ist, wobei der rohrförmige Schraubenfederkern (11) eine innere rohrförmige Fläche (12) und eine äußere rohrförmige Fläche (13) aufweist;
c. Aufbringen einer Abdeckschicht (14, 15) mindestens auf die innere rohrförmige Fläche (12) des rohrförmigen Schraubenfederkerns (11), um die Schraubenfederwicklung in der kompakten Auslegung zu verriegeln.

11. Verfahren nach Anspruch 10, wodurch der Schritt c. des Aufbringens der Abdeckschicht (14, 15) durch Vulkanisieren eines Elastomermaterials erfolgt.

## Revendications

1. Dispositif de support hydrodynamique prédisposé à être utilisé en particulier dans une pompe centrifuge (1) entre un élément fixe (4) et un élément rotatif (2) de la même pompe, comprenant un noyau tubulaire (11) ayant un axe longitudinal (A) et ayant une surface tubulaire intérieure (12) et une surface tubulaire extérieure (13), ledit noyau (11) étant obtenu sous la forme d'un ressort hélicoïdal, par enroulement d'un matériau en fil autour dudit axe longitudinal (A), où ledit noyau tubulaire (11) à ressort hélicoïdal a une pluralité de spires disposées les unes sur les autres d'une manière semblable à un emballage dans une configuration compacte, ledit noyau tubulaire (11) à ressort hélicoïdal étant obtenu avec un pas substantiellement égal à la dimension transversale, le long dudit axe longitudinal, dudit matériau en fil enroulé, et il comprend au moins une couche de revêtement (14, 15) appliquée sur au moins une desdites surfaces tubulaires (12, 13) dudit noyau tubulaire (11) à ressort hélicoïdal, de manière à verrouiller ledit enroulement du ressort hélicoïdal dans ladite configuration compacte, ladite au moins une couche de revêtement (14) étant de forme cylindrique et revêtant ladite surface tubulaire intérieure (12) dudit noyau (11), étant destinée à être appliquée sur ledit élément rotatif (12).

2. Dispositif selon la revendication 1, où ledit noyau (11) est obtenu à partir d'un matériau en fil métallique enroulé autour dudit axe longitudinal (A).

3. Dispositif selon la revendication 1 ou 2, où ladite au moins une couche de revêtement (14, 15) est faite d'un matériau élastomère.

4. Dispositif selon la revendication 3, où ladite au moins une couche de revêtement (14, 15) est appliquée sur ladite respective surface tubulaire (12, 13) par vulcanisation.

5. Dispositif selon la revendication 1, où ladite couche de revêtement (14) comprend une pluralité de rainures (14a), pour faciliter l'entrée de liquide entre ladite couche de revêtement (14) et ledit élément rotatif (2) opposé, de manière à obtenir le support hydrodynamique de l'élément rotatif (2).

6. Dispositif selon la revendication 5, où lesdites rainures (14a) ont une extension axiale et sont régulièrement réparties autour dudit axe longitudinal (A).

7. Dispositif selon la revendication, où il comprend une autre couche de revêtement (15) appliquée sur la surface à ladite au moins une surface tubulaire (12, 13) sur la surface opposée.

8. Dispositif selon la revendication 7, où ladite autre couche de revêtement (15) est de forme cylindrique et comprend une pluralité d'incisions axiales (15a) obtenues par des moyens de positionnement pendant la vulcanisation dudit matériau élastomère.

9. Pompe centrifuge comprenant le dispositif de support hydrodynamique (10) selon une ou plusieurs des revendications précédentes, ledit dispositif de support hydrodynamique (10) étant positionné intégralement joint à un élément fixe (4) de ladite pompe (1) dans un respectif siège de logement formé par ledit élément fixe (4) et interposé entre ledit élément fixe (4) et un élément rotatif (2) de ladite pompe (1).

10. Méthode pour obtenir un dispositif de support hydrodynamique selon l'une des revendications de 1 à 8, où la méthode prévoit les étapes consistant à :
a. fournir un matériau en fil ;
b. enrouler sous la forme d'un ressort hélicoïdal ledit matériau en fil autour d'un axe longitudinal (A), fournissant une pluralité de spires disposées les unes sur les autres d'une manière semblable à un emballage dans une configuration compacte, un noyau tubulaire (11) à ressort hélicoïdal étant obtenu avec un pas substantiellement égal à la dimension transversale, le long dudit axe longitudinal, dudit matériau en fil enroulé, où ledit noyau tubulaire (11) à ressort hélicoïdal a une surface tubulaire intérieure (12) et une surface tubulaire extérieure (13) ;
c. appliquer une couche de revêtement (14, 15) sur au moins ladite surface tubulaire intérieure (12) dudit noyau tubulaire (11) à ressort hélicoïdal, de manière à verrouiller ledit enroulement du ressort hélicoïdal dans ladite configuration compacte.

11. Méthode selon la revendication 10, où ladite étape c. consistant à appliquer ladite couche de revêtement (14, 15) a lieu par vulcanisation d'un matériau élastomère.
